# EUROPEAN PATENT APPLICATION

(11) **EP 4 513 093 A1**
(43) Date of publication of application: **26.02.2025**
(21) Application number: 24195645.7
(22) Date of filing: 21.08.2024
(51) Int. Cl.: F24D 1/00, F24D 10/00, F01K 17/02, F24D 11/00

(54) **METHOD AND SYSTEM FOR DISTRIBUTING HEAT THROUGH A HEAT NETWORK**

(30) Priority: 22.08.2023 BE 202305697
(71) Applicant: VOC BV, 2520 Ranst (BE)
(72) Inventor: VAN OEVELEN, Chris, 2520 Ranst (BE)
(74) Representative: Arnold & Siedsma

(57) **Abstract**

The present description relates to a method and distribution system for distributing heat to consumers (S1, T1, T2), such as a plurality of public or industrial buildings, through a heat network. The method comprises of supplying steam (ss) coming from a steam source (HS) to a primary consumer (S1) and herein delivering heat (Q), wherein the steam (ss) is converted into condensate (cs) at a location which lies higher than the downstream secondary part (H2) of the heat network in order to supply the condensate (cs) to the one or more secondary consumers (T1, T2) in the secondary part (H2) using a hydrostatic pressure.

## Description

### Technical field

The present invention relates to a method and a system for distributing heat coming from a heat source through a heat network, preferably a district heating network. The heat can be delivered to a plurality of consumers such as individual buildings, such as a hospital or a public swimming pool, or a group of buildings such as a housing estate.

### Background

Conventional heat networks are systems developed for supplying heat to for instance a plurality of buildings or a whole district from central heat source. The heat can be carried, for instance in the form of warm water, via a network of conduits to the individual buildings or customers. Heat transfer stations which receive heat from the network are typically present inside each building. These transfer stations typically comprise heat exchangers which transfer heat from the network to the internal heating system of the building. The internal heating system of the building can for instance comprise radiators or floor heating. After the heat has been consumed in the buildings, the cooler water is fed back to the central heat source via a separate set of conduits, the return network, and so forms a closed system with a continuous circulation.

Heat networks provide several advantages, particularly the option of using renewable and residual heat, which can decrease the dependence on fossil fuels. Heat networks can furthermore help to reduce maintenance and installation costs for customers owing to elimination of the need for individual boilers in each building.

Challenges are nevertheless associated with conventional heat networks, particularly in respect of keeping the efficiency of the whole system high in order to be able to provide a cost-effective and energy-efficient system. The efficiency of the system also depends on minimization of energy losses during distribution, as well as the energy required for distribution of the heat, preferably CO₂-emissionless heat, for instance the energy needed for circulation pumps to pump the warm water, which functions as energy carrier, around the heat network.

There is therefore a need for a technique for distributing heat with a high efficiency, particularly for distributing heat efficiently over longer distances, such as distances of more than 500 metres, or more than 1 km.

### Summary of the invention

An object of embodiments of the invention is to distribute heat with high efficiency.

A first aspect provides for this purpose a method for distributing heat via a heat network, preferably a district heating network, to consumers (S1, T1, T2) such as a plurality of public or industrial buildings. The consumers (S1, T1, T2) comprise a primary consumer (S1), such as a steam consumer. The consumers further comprise one or more secondary consumers (secondary consumers (T1, T2)), such as a high-profile consumer and a low-profile consumer.

The primary consumer (S1) is connected to a primary part (H1) of the heat network. The heat network further has a secondary part (H2) which lies downstream of the primary part (H1). The one or more secondary consumers (T1, T2) are connected to the secondary part (H2).

The method comprises of supplying steam (ss) coming from a steam source (HS) to the primary consumer (S1) and herein delivering heat, wherein the steam (ss) is converted into condensate (cs) at a location which lies higher than the downstream secondary part (H2) of the heat network in order to supply the condensate (cs) to the one or more secondary consumers (T1, T2) in the secondary part (H2) using a hydrostatic pressure. Embodiments of the invention have the advantage that heat can be distributed through a heat network with a high and/or an increased efficiency relative to conventional heat networks. Conventional heat network systems often depend on circulation pumps to make the energy carrier (typically water) in the heat network circulate through the network, this resulting in a high energy consumption and high operational costs. The method described here provides for this purpose the advantage of a reduced need for and/or consumption by the circulation pumps and so provides for an efficient heat distribution inside the heat network. This is because an efficient energy transport with a reduced need and/or no need for circulation pumps is provided for by supplying steam (ss) coming from a heat source, this being a steam source (HS) here, to the primary consumer (S1). Having the steam condense into water (condensate) releases latent heat which can be supplied to the primary consumer. Inventive insights by the inventor have further provided that by converting the steam into condensate at the higher location the condensate can be supplied to the downstream secondary part (H2) of the heat network in simple and efficient manner using the hydrostatic pressure and/or by the effect of gravitation. This results in a reduced need for circulation pumps with high powers, and thus enables the energy consumption of the heat network to be reduced. In this way the downstream secondary consumers (T1, T2) in the secondary part (H2) can be provided with heat in an efficient manner by supplying the condensation thereto using the force of gravity. The secondary heat network can further be held at a desired operating pressure without any or with less dependence on circulation pumps. Furthermore, the option and flexibility of expanding the heat network further are also provided.

The method preferably comprises of subsequently delivering the formed condensation (cs) to the one or more secondary consumers (T1, T2) in the secondary part (H2) using the hydrostatic pressure as a result of the height difference (Δh) which is thus present, particularly the height difference between the location of the phase transition of the steam and a start of the secondary part of the heat network. The height difference is preferably chosen such that the condensation can be fed to the secondary part using gravitational forces, most preferably using only gravitational forces. More specifically, the secondary part is pressurized by the volume of condensation in the conduit between the location of the phase transition and a start of the secondary heat network, or more specifically the location of the first secondary consumer. The formed condensate (cs) is preferably supplied to the secondary part (H2) of the heat network at a pressure amounting to more than 2 bar, preferably a pressure of more than 3 bar, still more preferably a pressure of more than 4 bar, even more preferably a pressure of more than 5 bar, such as a pressure of between 5-6 bar, using the hydrostatic pressure resulting from a height difference (Δh). This has the advantage that sufficient pressure is provided, so that the condensate can be fed to the secondary consumers and/or can flow back to the steam source. It will be apparent that, in order to provide a sufficiently high pressure, a height difference is opted for which is sufficiently large for the condensate to be fed through the heat network efficiently. The supplied steam (ss) is preferably converted into condensate (cs) at a height of at least 10 metres, preferably at least 20 metres above the ground. In this way the condensate has a high and usable potential energy for flowing to the downstream secondary part of the heat network. The hydrostatic pressure with which the condensate (cs) is delivered to a firstly-located secondary consumer (T1) in the secondary part (H2) is preferably the result of a height difference of more than 10 metres, preferably more than 20 metres, more preferably more than 30 metres. In this way the condensate has a desired potential energy for flowing to the downstream secondary part of the heat network so that secondary consumers with a low consumption can be provided with heat. In an embodiment the difference in height between the location where the steam (ss) is converted into condensate (cs) when heat is delivered to a primary consumer (S1) and the location of a first subsequent downstream secondary consumer (T1) defines a height difference of more than 10 metres. In this way the condensate is delivered to the secondary consumer using a pressure, also described as hydrostatic pressure, as a result of the force of gravity. This results in a reduced need for circulation pumps for feeding the energy carrier (in this case condensate) through the heat network. The heat network described herein thus has the advantage, among others, of having a low consumption. The difference in height between the location whether steam (ss) is converted into condensate (cs) when heat is delivered to a primary consumer (S1) and the location of a first subsequent downstream secondary consumer (T1) still more preferably defines a height difference of more than 20 metres, more preferably more than 30 metres. In this way a desired pressure is provided in the secondary part and the energy carrier can be fed through the secondary part and back to the steam source. A desired and usable operating pressure is thus moreover applied to the secondary part of the heat network so that the secondary consumers can consume heat reliably. The primary part of the heat network can comprise one or more primary consumers, for instance one or more steam consumers (S1, S2, S3, ...). The secondary part, downstream of the first primary part, can have one or more secondary consumers. For instance one or more first-type consumers (T1a, T2b, T3c ...) which are connected between a feed conduit (K2) and a return conduit (K3) and/or one or more second-type consumers (T2a, T2b, ...) which are connected in parallel to the return conduit (K3). According to a further aspect, a method can thus be provided for distributing heat via a heat network irrespective of the characteristics in connection with the primary part as described herein in more detail below. In an embodiment of the method the steam (ss) is supplied to a primary consumer (S1) via a steam feed conduit (K1). The steam feed conduit (K1) can thus bring a primary consumer (S1), for instance a firstly-located primary consumer, into connection with the steam source (HS). It must be noted that a plurality of primary consumers (S1), for instance a plurality of steam consumers, can be connected in the primary part (H1) of the heat network. The "firstly-located primary consumer" then refers to the consumer lying least upstream and closest to the steam source. In a more specific embodiment the steam feed conduit (K1) has a first conduit end (K1a) at the steam source (HS) and a second conduit end (K1b) lying at a firstly-located primary consumer (S1) in the primary part (H1) of the heat network (H1), wherein the second conduit end (K1b) lies more than 10 metres, preferably more than 20 metres, more preferably more than 30 metres and most preferably more than 40 metres higher than the first end. The method preferably comprises of: - transporting and supplying steam (ss) through the steam feed conduit (K1) up to at least the second conduit end (K1b). By thus transporting the steam upward, for instance uphill, the energy carrier (in this case steam) gains potential energy owing to the height. This potential energy can be utilized when the condensation formed from the steam is supplied to the secondary part of a heat network downward, for instance downhill, via one or more conduits, for instance via a (condensation) feed conduit (K2). In this way the need for circulation pumps can be reduced. The energy distribution so supported by gravity provides for an efficient distribution of the heat. This is because it has been found that by transporting the steam to a higher area or location via a steam feed conduit the thermal energy can be distributed efficiently to the secondary heat network by distributing the condensation downstream through the secondary part of the heat network using the thus present hydrostatic pressure in the heat network. In other words, by feeding the condensation through the secondary part of the heat network mainly via gravitational forces. In an embodiment a firstly-located primary consumer (S1) in the primary part (H1) of the heat network lies at a distance, preferably a distance of more than 500 m, more preferably more than 1 km, still more preferably more than 1.5 km, from the steam source (HS). In this way an improved distribution of thermal energy is provided for, and more space and possibility can be provided for the secondary part (H2) of the heat network and any expansion thereof. The method here preferably comprises of: - transporting steam (ss) from the steam source (HS) up to the firstly-located primary consumer (S1) in the primary part (H1) of the heat network before feeding the formed condensation (cc) back to the steam source (HS) via the secondary part (H2) of the heat network. The heat network preferably forms a closed loop. In an embodiment the method further comprises of: - feeding the secondary part (H2) of the heat network with heat, preferably heat from steam (ss') coming from the steam source (HS). In this way an additional heat injection in the secondary part of the heat network can be provided. More specifically, the secondary part (H2) of the heat network is fed with heat via steam from the steam feed conduit (K1). The steam can be provided directly from the steam source and/or from a steam feed conduit (K1). For instance via one or more connecting conduits which connect the steam source and/or the steam feed conduit (K1) to the secondary part (H2) of the heat network, typically with heat exchangers (HEX₂, HEX₃) which are configured to supply heat to the secondary part. In an embodiment one or more heat exchangers (HEX₂) are configured to supply heat to the feed conduit (K2) and/or one or more heat exchangers (HEX₃) are configured to supply heat to a return conduit (K3) to which one or more second-type secondary consumers (T2) are connected. Preferably, these one or more second-type secondary consumers are connected in parallel to the return conduit (K3) and the one or more heat exchangers (HEX₃) are configured to supply heat upstream of at least one of the one or more second-type secondary consumers (T2). According to an embodiment, the method comprises of: - feeding the secondary part (H2) of the heat network with residual heat from external producers, such as a hydrogen producer with an electrolysis device wherein heat is released during electrolysis. In this way an additional heat injection into the heat network can be provided. The additional heat injection from the external producer can be supplied at a feed point upstream of the steam source and downstream of the secondary consumers. In this way the returning energy carrier can be preheated before it is received by the steam source, just as if the steam source itself were to comprise an H₂-producing unit as well. This has a positive effect on the efficiency. In an embodiment the secondary part (H2) of the heat network is fed with residual heat from an external producer, wherein heat is supplied to the return conduit upstream of the steam source, preferably upstream and in the heat network directly adjacently of the steam source. This means at the position of a directly adjacent location, wherein there are no more consumers in the heat network between the directly adjacent location and the steam source. In this way the efficiency of the whole system can be increased. The method preferably comprises of feeding the secondary part (H2) of the heat network with heat via steam from the steam feed conduit (K1). For instance wherein the secondary part is fed via heat exchangers (HEX₂, HEX₃). The heat exchangers (HEX₂, HEX₃) can here be arranged to supply heat to the secondary part (H2) upstream and/or downstream of the one or more secondary consumers (T1, T2), for instance by supplying heat to a feed conduit (K2) and/or to a return conduit (K3). In this way temperature regimes in the secondary part can be regulated as desired. According to an embodiment, the method further comprises of: - storing the condensate (cs) in a storage tank (BT) at a location higher than the one or more secondary consumers (T1, T2) in order to deliver the condensate (cs) from the storage tank (BT) using a hydrostatic pressure resulting from a height difference between the storage tank (BT) and the one or more secondary consumers (T1, T2) in the secondary part (H2) of the heat network. Use and placement of the storage tank make it possible to balance the heat demand, also referred to as load, and heat supply and to ensure that the heat system is operating with a high efficiency. The stored condensation can furthermore be supplied from the tank to the one or more downstream secondary consumers (T1, T2) using a pressure resulting from the thus present height difference, this reducing the need for circulation pumps. This results in a low consumption of the heat network itself. The one or more downstream secondary consumers (T1, T2) thus lie at a lower level relative to the storage tank (BT), also referred to as buffer tank.

According to an embodiment, the method further comprises of: - increasing and/or maintaining the pressure in the secondary part (H2) of the heat network using a steam pressure coming from the steam source (HS). In this way a desired throughfeed of the energy carrier (water or condensation) through the secondary part of the heat network can be provided. A desired supply of the energy carrier to the one or more secondary consumers in the secondary part of the heat network and/or a desired return of the energy carrier to the steam source is ensured hereby. According to an embodiment, the pressure in the secondary part (H2) of the heat network is increased and/or maintained using a steam pressure coming from the steam feed conduit (K1), preferably increased and/or maintained via one or more controllable pressure conduits. The secondary part (H2) of the heat network can comprise a feed conduit (K2) and a return conduit (K3). The secondary part (H2) can thus be configured, for instance according to a further aspect, irrespective of the configuration of the primary part (H1) of the heat network. The secondary consumers (T1, T2) can comprise one or more first-type consumers (T1a, T1b, ...), preferably in combination with one or more second-type consumers (T2a, T2b, ...). The first-type secondary consumers (T1) are typically connected between a feed conduit (K2) and a return conduit (K3). The second-type secondary consumers (T2) are preferably connected in parallel to the return conduit (K3). Making the combination of the first- and second-type consumers enables the heat provided in the heat network to be utilized efficiently. This has a positive effect on the distribution of the heat with an increased efficiency. One or more first-type secondary consumers (T1, T1a, T1b) are preferably connected between the feed conduit (K1) and the return conduit (K3). The method preferably comprises here of: - delivering condensate (cs) (or warm water in the case that only warm water is supplied instead of steam) as energy carrier (e1) to the one or more connected first-type secondary consumers (T1, T1a, T1b) via the feed conduit (K2); and - receiving used energy carrier (e2) via the return conduit (K3) and subsequently feeding the used energy carrier (e2) back to a heat source, this being the steam source (HS) in the case where steam is supplied, via the return conduit (K3). In this way heat can be delivered to the one or more first-type first secondary consumers. More preferably, the method further comprises of: - delivering heat to one or more second-type consumers (T2, T2a, T2b) which are connected in parallel to the return conduit (K3) in the secondary part (H2) of the heat network via respectively a branching point (T2p1) and a return point (T2a2) on the return conduit. A branching point of a second-type consumer preferably lies on the return conduit downstream of a receiving point where the return conduit is configured to receive used energy carrier from a first-type consumer. This configuration has a positive effect on the efficiency. Still more preferably, the method further comprises of: - regulating a flow rate in the return conduit (K3) or having it be regulated by the corresponding consumer (T2a), which is connected in parallel, using a regulator (R) which is placed between the branching point (T2p1) and the return point (T2a2). This regulator (R) is preferably connected operatively to the corresponding consumer connected in parallel, so that this consumer is able to regulate its heat consumption.

In a determined embodiment the first-type consumers (T1a, T1b, ...) have a higher heat demand than the second-type consumers (T2a, T2b, ...). Or, in other words, the second-type consumers (T2a, T2b, ...) which are connected in parallel to the return conduit typically have a heat demand which is smaller than the heat demand of the first-type consumers (T1a, T1b, ...). In other words, the first-type consumers (T1a, T1b, ...) are high-profile consumers and the second-type consumers (T2a, T2b, ...) are low-profile consumers, meaning that the second-type consumers wish the energy to be at a lower temperature than the temperature at which the first-type consumers wish to receive the energy carrier.

The term "heat demand" refers here to the desired inlet temperature of the energy carrier in respect of the consumer in question. The first-type consumers thus desire an inlet temperature which is higher than the desired inlet temperature of the second-type consumers. The consumers are typically configured specifically to receive the energy carrier at a predetermined temperature. There are thus high-profile consumers that receive the energy carrier at a temperature which is higher than the temperature at which low-profile consumers wish to receive the energy carrier.

Inventive insights have provided that the heat demand and temperature requirements of consumers can vary. Connecting them and configuring them on the basis of their specific requirements in intelligent manner in the distribution system enables provision of an optimal energy utilization. The configuration of the first- and second-type consumers described herein thus provides a high energy utilization. High-profile consumers require the energy carrier at a higher temperature and are preferably connected at a location in the distribution network where the inlet temperature is higher (and higher temperature regime). Low-profile consumers are preferably connected at a location with a lower inlet temperature (and lower temperature regime). In an embodiment the method comprises the step of: - supplying heat via the energy carrier to one or more first-type consumers;
- subsequently receiving used energy carrier from the one or more first-type consumers; and supplying heat via the used energy carrier to the second-type consumers.

The second-type consumers (T2a, T2b, ...) for example require a flow rate of energy carrier (water or condensation) at a temperature t2, while the first-type consumers (T1a, T1b, ...) require a similar flow rate at a temperature t1, which is higher than temperature t2. More preferably, the method further comprises of: - regulating a temperature regime and/or a flow rate inside the feed conduit (K2) and the return conduit (K3) using one or more control conduits (B1, B2) which are provided with one or more regulators (R2, R2'). The control conduits (B1, B2) are for instance connected between the feed conduit (K2) and the return conduit (K3).

The steam source (HS) typically lies at a steam producer, such as a waste incineration plant, the plurality of consumers differing from the steam producer. The steam producer can thus utilize the steam by providing its heat to the plurality of consumers. In this way the produced steam can be utilized more productively. An example of a steam producer is a waste incineration plant. Such plants incinerate non-hazardous household waste in order to produce heat, which is then used to produce steam, such as in boilers. The steam is then preferably used for district heating. Any producer with a suitable exothermic process and/or surplus of heat can fulfil the function of heat producer.

In determined embodiments additional heat is supplied to the distribution system, for instance heat coming from the heat discharge of air conditioners, heat discharge of CNG service stations, heat discharge of beer breweries. The steam source (HS) can be an industrial residual heat source (HS) and/or the plurality of consumers (S1, T1, T2) are for instance selected from residential consumers, commercial consumers, industrial consumers or combinations thereof, the plurality of consumers (S1, T1, T2) preferably being selected from residential consumers and commercial consumers.

The residential consumers are for instance selected from one or more of: apartment complexes, residential areas, single-family homes, care institutions. The commercial consumers are for instance selected from one or more of: office buildings, shopping centres, leisure centres, sports centres, hotels, schools, public swimming pools, hospitals and the like. The industrial consumers are for instance selected from one or more of: factories, refineries, food processing companies. According to an embodiment, the primary consumer is an industrial consumer, and the secondary consumers are selected from residential consumers and/or commercial consumers. The secondary part (H2) of the heat network can be configured according to a further aspect and irrespective of the manner in which the primary part (H1) is configured. According to a further aspect, one or more consumers (T1a, T2b, T3c ...), such as one or more first-type consumers, are preferably connected between a feed conduit (K2) and a return conduit (K3), and one or more consumers (T2a, T2b, ...), such as one or more second-type consumers, are connected in parallel to said return conduit (K3). According to a further aspect, a method can thus be provided for distributing heat via a heat network (irrespective of the characteristics in connection with the primary part). More specifically, according to the further aspect a method is provided for distributing heat via a heat network. The further aspect has the same objective, among others, as the above described method, more specifically for distributing heat with an increased efficiency. The further aspect thus provides an alternative solution to the same problem/objections as already described above. A method is thus provided for distributing heat via a heat network comprising a feed conduit (K2) and a return conduit (K3), wherein the heat is supplied to a plurality of consumers (T1, T2) which comprise one or more first-type consumers (T1) and one or more second-type consumers (T2) and which are connected to the heat network; the method comprising of: - supplying heat (cs) coming from a heat source (HS) via the feed conduit (K2) to the first-type consumers which are connected between the feed conduit (K2) and the return conduit (K3); wherein heat is supplied to the first-type consumers (T1, T1a, T1b) using an energy carrier (e1); and - receiving used energy carrier (e2) from the first-type consumers (T1) via the return conduit (K3) and subsequently feeding the used energy carrier (e2) back to the steam source (HS) via the return conduit (K3); - delivering heat to one or more second-type consumers (T2, T2a, T2b) which are connected in parallel to the return conduit (K3) via respectively a branching point (T2p1) and a return point (T2a2). The plurality of consumers (T1, T2) are for instance a plurality of public or industrial buildings. The technical features and advantages described above in connection to the method(s) are equally applicable to the heat distribution system described below. The combination of the described first- and second-type consumers has an efficient heat utilization, whereby the heat can be distributed with a high efficiency. According to an embodiment, a branching point of a second-type consumer lies downstream of a receiving point where the return conduit receives used energy carrier from a first-type consumer. A further aspect of the invention provides a heat distribution system for distributing heat via a heat network (100), preferably a district heating network, to a plurality of consumers (S1, T1, T2). The plurality of consumers are for instance a plurality of public or industrial buildings. The heat network comprises a primary part (H1) for connection to a primary consumer (S1) and a secondary part (H2) for connection to one or more secondary consumers (T1, T2). The secondary part (H2) lies downstream of the primary part (H1). The heat distribution system is configured with: - a steam feed conduit (K1) which is arranged to feed steam (ss) from a steam source (HS) to the primary consumer (S1) in order to supply heat to the primary consumer (S1), wherein the steam (ss) is converted into condensate (cs) at a location which lies higher than the downstream secondary part (H2) of the heat network. The heat distribution system is further configured with: - a feed conduit (K2) which is arranged to supply the formed condensate (cs) from the higher location in the primary part (H1) to the one or more secondary consumers (T1, T2) in the secondary part (H2) using a hydrostatic pressure, also referred to as gravitational pressure.

More specifically, with the heat distribution system heat can be distributed through a heat network with a high and/or an increased efficiency relative to conventional heat networks. Using the height difference, the need for and the dependence on circulation pumps for circulating the energy carrier (such as condensation or water) through the heat network can be reduced. This is because such circulation with pumps requires a high energy consumption and results in high operational costs. The height difference moreover provides for a reliable and usable operating pressure in the secondary part of the heat network.

Inventive insights have provided that an intelligent layout of the heat network and configuration of the consumers enables the heat to be distributed through a heat network with high and/or increased efficiency. The hydrostatic pressure refers to the pressure which is exerted on the energy carrier (the condensation or water) as a result of the force of gravity and ensures that the energy carrier can be distributed through the heat network without and/or with fewer circulation pumps relative to a conventional heat network. An efficient heat distribution is hereby provided.

The distribution system is preferably configured to convert the steam (ss) into the condensate (cs) at a height so that the hydrostatic pressure amounts to more than 2 bar, preferably more than 3 bar, still more preferably more than 4 bar, even more preferably more than 5 bar, such as between 5 and 6 bar. In this way a reliable and usable operating pressure in the secondary part of the heat network is provided for.

According to an embodiment of the heat distribution system, the system is configured to supply heat to the primary consumer (S1) which lies higher relative to the one or more secondary consumers (T1, T2). In this way the energy carrier can be transported using gravitation. This results in a lower own energy consumption.

According to an embodiment of the heat distribution system, the system is configured to supply heat in the form of steam to the primary consumer (S1), which lies higher relative to the steam source (HS). In this way the condensate formed at the primary consumer can be fed back to the steam source using gravitation. This results in a lower own energy consumption of the heat network as a result of less (optionally via frequency drivers) or no consumption via circulation pumps, which would be needed in conventional systems to pump water (typically many tons of water) around continuously. According to an embodiment of the heat distribution system, the primary consumer (S1) and the one or more secondary consumers (S2) lie higher relative to the steam source (HS). In this way the formed condensate can be fed back to the steam source in efficient manner using gravitation.

According to an embodiment of the heat distribution system, the distribution system is provided with a heat exchanger (HEX₁) for supplying heat to the primary consumer (S1) by means of the steam (ss), the heat exchanger (HEX₁) here preferably being placed at a height of at least 10 metres, preferably at least 20 metres, still more preferably at least 30 metres above the ground. In this way the formed condensate in the heat exchanger (HEX₁) can be efficiently fed on to the secondary part (H2) of the heat network and subsequently fed back to the original heat source, this being the steam source, using gravitation.

According to an embodiment of the heat distribution system, the steam feed conduit (K1) has a first conduit end (K1a) at the steam source (HS). The steam feed conduit further has a second conduit end (K1b) at a firstly-located primary consumer (S1) in the primary part (H1) of the heat network (H1). The second conduit end (K1b) lies higher than the first end (K1a). The steam can hereby be converted into condensate (or condensation) and be carried further downstream using gravity, preferably using only gravity. The height difference between the first and second conduit end (K1a, K1b) of the steam feed conduit (K1) preferably amounts to more than 10 metres, preferably more than 20 metres, more preferably more than 30 metres and most preferably more than 40 metres. In this way the condensate can be formed with a potential energy, so that the condensate can be fed to the downstream secondary part of the heat network with less or no need for circulation pumps. This results in a lower own energy consumption of the heat network.

According to an embodiment of the heat distribution system, the steam feed conduit (K1) covers a distance between the steam source (HS) and a firstly-located consumer (S1), such as a steam consumer, in the primary part (H1) of at least 500 m, preferably at least 1 km, more preferably at least 2 km. This distance is measured along a straight line between the steam source and the firstly-located consumer. In other words, the distance is measured without taking into consideration obstacles or bends, but along a direct and continuous line. By opting for a sufficiently great distance between the steam source and the first consumer (S1) the steam is carried to a remote location and more flexibility and possibility for connecting a plurality of consumers and/or additionally heat producers (suppliers) to the heat network are provided for. This is an advantage over conventional systems, which typically have a maximum capacity in that the pumps are limited to pumping a predetermined quantity of water. The distribution system allows a plurality of heat exchangers to be added, subject to the number of consumers and/or the growth thereof. One or more heat exchangers which supply heat from the steam source and/or additional heat producers to the heat network can thus be provided. The heat distribution system described here provides for this purpose the advantage of possible expansion in that the steam producer and/or additional heat producers can continue to provide heat. According to an embodiment of the heat distribution system, the system further comprises one or more connecting conduits (KV1, KV2) which connect the steam feed conduit (K1) to the secondary part (H2) of the heat network in order to feed the secondary part (H2) with thermal energy. The connecting conduits (KV1, KV2) thus provide the option of regulating temperature regimes in the secondary part (H2) of the heat network without having to depend on the behaviour of the one or more first consumers (S1, S2, ...) in the primary part of the heat network. In this way a better control of the heat network can be provided. The one or more connecting conduits (KV1, KV2) are preferably provided with regulators which are connected operatively to an operator of the distribution system. The one or more connecting conduits (KV1, KV2) are preferably connected to heat exchangers (HEX₂, HEX₃) which are arranged in the secondary part (H2) of the heat network in order to supply thermal energy from steam (ss') from the connecting conduits (KV1, KV2) to the secondary part (H2) of the heat network. The heat exchangers (HEX₂, HEX₃) are more preferably arranged to deliver heat upstream and/or downstream of the secondary heat consumers (T1, T2) in the secondary part (H2) of the heat network. The heat exchangers (HEX₂, HEX₃) are for instance arranged to deliver heat upstream and/or downstream of the secondary heat consumers (T1, T2) in the secondary part (H2) of the heat network. In this way more control and regulating options of the secondary part of the heat network are provided. The heat exchangers are for instance arranged to supply heat to feed points on the feed conduit (K2). The feed conduit (K2) is typically the conduit feeding condensation from the primary part to and through the secondary part. The feed conduit (K2) can thus supply heat to the secondary consumers. The feed points can lie between and/or upstream of the branching points from where first-type secondary consumers (T1a, T2b, ...) consume heat from the heat network. The heat exchangers can likewise be arranged to supply heat to a feed point on the return conduit (K3) to which one or more second-type secondary consumers (T2a) are connected in parallel. In the context of the heat network, the term "connect" refers to connecting to the heat network so that heat exchange is possible, for instance connecting a consumer such as a building to the heat network. According to an embodiment of the distribution system, the primary part (H1) comprises a plurality of primary consumers (S1, S2) and the distribution system is configured to supply steam (ss) to the plurality of primary consumers (S1, S2). The plurality of primary consumers (S1, S2, ...) can be connected one behind the other in series in the primary part of the heat network, or can be connected parallel to each other in the primary part (H2) of the heat network in order to together feed formed condensation to the secondary part of the heat network. According to a particular embodiment of the heat distribution system, the secondary part (H2) of the heat network is configured with said feed conduit (K2) and a return conduit (K3). It should be noted that the secondary part can in this case be configured independently of the layout of the primary part of the heat network.

According to this particular embodiment, the distribution system is configured to supply heat using an energy carrier (e1), typically water such as the above described condensate (cs), through the feed conduit (K2) to one or more consumers (T1, T1a, T1b), such as one or more first-type consumers, which are connected between the feed conduit (K2) and the return conduit (K3). The distribution system is here further configured to receive the used energy carrier (e2) back from these one or more consumers (T1, T1a, T1b) via the return conduit (K3) and to return the used energy carrier (e2) back to the steam source (HS) via the return conduit (K3). The distribution system is preferably further configured to supply heat to one or more second-type consumers (T2, T2a, T2b) which are connected in parallel to the return conduit (K3) via respectively a branching point (P2a) and a return point (P2b). By making the combination of the first- and second-type (secondary) consumers the heat provided in the heat network can be utilized efficiently. A regulator (RP2), such as a control valve, is preferably arranged in the return conduit (K3) between the branching point (P2a) and the return point (P2b). The regulator (RP2) is preferably connected operatively to a corresponding consumer (T2b) which is connected in parallel. In this way the consumer controls the amount of heat which can be supplied via the return conduit.

According to an embodiment of the heat distribution system, the system is further configured to preheat returning water in the return conduit (K3) upstream of the steam source (HS), for instance with residual heat. In this way the general efficiency and heat utilization can be increased.

More specifically, according to the further aspect a system is provided for distributing heat via a heat network. The further aspect has the same objective, among others, as that described above, more specifically for distributing heat with an increased efficiency. The further aspect thus provides an alternative solution to the same problem.

A heat distribution system which comprises a heat network for distributing heat is thus provided, wherein the heat network comprises a feed conduit (K2) and a return conduit (K3), wherein the system is configured to supply heat to a plurality of consumers (T1, T2) such as a plurality of public or industrial buildings; wherein the plurality of consumers (T1, T2) comprises one or more first-type consumers (T1) and comprises one or more second-type consumers (T2), wherein:
- the feed conduit (K2) is configured to supply heat from a heat source (HS) to the first-type consumers using an energy carrier (e1);
- the return conduit (K3) is configured to receive the used energy carrier (e2) from the first-type consumers (T1, T1a, T1b) and is further configured to feed the used energy carrier (e2) back to the heat source (HS);
- the return conduit (K3) is further configured to deliver heat to one or more second-type consumers (T2, T2a, T2b) which are connected in parallel to the return conduit (K3) via respectively a branching point (T2p1) and a return point (T2a2). A regulator (RP2), such as a control valve, is preferably arranged in the return conduit (K3) between the branching point (P2a) and the return point (P2b), the regulator (RP2) still more preferably being connected operatively to a relevant second-type consumer (T2b).

Aspects of the invention will now be described with reference to the following clauses.
1. Method for distributing heat via a heat network, preferably a district heating network, to consumers (S1, T1, T2) such as a plurality of public or industrial buildings, wherein a primary consumer (S1) is connected to a primary part (H1) of the heat network; wherein the heat network further comprises a secondary part (H2) which lies downstream of the primary part (H1) and wherein one or more secondary consumers (T1, T2) are connected to the secondary part (H2); wherein the method comprises of:
   - supplying steam (ss) coming from a steam source (HS) to the primary consumer (S1) and herein delivering heat (Q), wherein the steam (ss) is converted into condensate (cs) at a location which lies higher than the downstream secondary part (H2) of the heat network in order to supply the condensate (cs) to the one or more secondary consumers (T1, T2) in the secondary part (H2) using a hydrostatic pressure.
2. The method according to the foregoing clause,
   wherein formed condensate (cs) is supplied to the secondary part (H2) of the heat network at a pressure amounting to more than 2 bar, preferably a pressure of more than 3 bar, still more preferably a pressure of more than 4 bar, even more preferably a pressure of more than 5 bar, such as between 5-6 bar, using a hydrostatic pressure resulting from a height difference (Δh).
3. The method according to any one of the foregoing clauses, wherein the supplied steam (ss) is converted into condensate (cs) at a height of at least 10 metres, preferably at least 20 metres above the ground.
4. The method according to any one of the foregoing clauses, wherein the hydrostatic pressure with which the condensate (cs) is delivered to a firstly-located secondary consumer (T1) in the secondary part (H2) is the result of a height difference of more than 10 metres, preferably more than 20 metres, more preferably more than 30 metres.
5. The method according to any one of the foregoing clauses, wherein the steam (ss) is supplied to a primary consumer (S1) of the primary part (H1) via a steam feed conduit (K1).
6. The method according to the foregoing clause,
   wherein the steam feed conduit (K1)
   has a first conduit end (K1a) at the steam source (HS) and
   has a second conduit end (K1b) lying at a firstly-located primary consumer (S1) in the primary part (H1) of the heat network (H1), wherein
   the second conduit end (K1b) lies more than 10 metres, preferably more than 20 metres, more preferably more than 30 metres and most preferably more than 40 metres higher than the first end and wherein the method comprises of:
      - transporting and supplying steam (ss) through the steam feed conduit (K1) up to at least the second conduit end (K1b).
7. The method according to any one of the foregoing clauses, wherein a firstly-located primary consumer (S1) in the primary part (H1) of the heat network lies at a distance of more than 500 m, preferably more than 1 km, more preferably more than 1.5 km, from the steam source (HS); the method further comprising of:
   - transporting steam (ss) from the steam source (HS) up to the firstly-located primary consumer (S1) in the primary part (H1) of the heat network before feeding the formed condensation (cc) in the primary part (H1) back to the steam source (HS) via the secondary part (H2) of the heat network.
8. The method according to any one of the foregoing clauses, further comprising of:
   - feeding the secondary part (H2) of the heat network with heat from steam (ss') coming from the steam source (HS).
9. The method according to the foregoing clause and clause 5,
   wherein the secondary part (H2) of the heat network is fed with heat via steam from the steam feed conduit (K1).
10. The method according to any one of the foregoing two clauses,
   wherein feeding the secondary part (H2) comprises of feeding via heat exchangers (HEX₂, HEX₃).
11. The method according to any one of the foregoing clauses, further comprising of:
   - storing the condensate (cs) in a storage tank (BT) at a location higher than the one or more secondary consumers (T1, T2) in order to deliver the condensate (cs) from the storage tank (BT) using a hydrostatic pressure resulting from a height difference between the storage tank (BT) and the one or more secondary consumers (T1, T2) in the secondary part (H2).
12. The method according to any one of the foregoing clauses, further comprising of:
   - increasing and/or maintaining the pressure in the secondary part (H2) of the heat network using a steam pressure coming from the steam source (HS).
13. The method according to the foregoing clause and clause 5, wherein the pressure in the secondary part (H2) of the heat network is increased and/or maintained using a steam pressure coming from the steam feed conduit (K1).
14. The method according to any one of the foregoing clauses, wherein the secondary part (H2) of the heat network comprises a feed conduit (K2) and a return conduit (K3), wherein one or more first-type secondary consumers (T1, T1a, T1b) are connected between the feed conduit (K1) and the return conduit (K3).
   wherein the method comprises of:
   - supplying condensate (cs) as energy carrier (e1) to the one or more connected secondary consumers (T1, T1a, T1b) via the feed conduit (K2); and
   - receiving the used energy carrier (e2) via the return conduit (K3) and subsequently feeding the used energy carrier (e2) back to the steam source (HS) via the return conduit (K3).
15. The method according to the foregoing clause, further comprising of:
   - delivering heat to one or more second-type consumers (T2, T2a, T2b) which are connected in parallel to the return conduit (K3) in the secondary part (H2) of the heat network via respectively a branching point (T2p1) and a return point (T2a2).
16. The method according to the foregoing clause, further comprising of:
   - regulating a flow rate in the return conduit (K3) or having it be regulated by the corresponding consumer (T2a), which is connected in parallel, using a regulator (R) which is placed between the branching point (T2p1) and the return point (T2a2).
17. The method according to any one of the foregoing four clauses, further comprising of:
   - regulating a temperature regime and/or a flow rate inside the feed conduit (K2) and the return conduit (K3) using one or more control conduits (B1, B2) which are provided with one or more regulators (R2, R2').
18. The method according to any one of the foregoing clauses, wherein the steam source (HS) is an industrial residual heat source (HS) and wherein the plurality of consumers (S1, T1, T2) are selected from residential consumers, commercial consumers, industrial consumers or combinations thereof.
19. The method according to the foregoing clause,
   wherein the residential consumers are selected from one or more of: apartment complexes, residential areas, single-family homes, care institutions; and/or
   wherein the commercial consumers are selected from one or more of: office buildings, shopping centres, hotels, schools; and/or
   wherein the industrial consumers are selected from one or more of: factories, refineries, food processing companies, paper factories.
20. Method for distributing heat via a heat network comprising a feed conduit (K2) and a return conduit (K3), wherein the heat is supplied to a plurality of consumers (T1, T2) such as a plurality of public or industrial buildings; wherein the heat network comprises a part (H2) to which one or more first-type consumers (T1) and one or more second-type consumers (T2) are connected; the method comprising of:
   - supplying heat (cs) coming from a heat source (HS) via the feed conduit (K2) to the first-type consumers which are connected between the feed conduit (K2) and the return conduit (K3); wherein the heat is supplied to the first-type consumers (T1, T1a, T1b) using an energy carrier (e1); and
   - receiving used energy carrier (e2) from the first-type consumers (T1) via the return conduit (K3) and subsequently feeding the used energy carrier (e2) back to the steam source (HS) via the return conduit (K3);
   - delivering heat to one or more second-type consumers (T2, T2a, T2b) which are connected in parallel to the return conduit (K3) via respectively a branching point (T2p1) and a return point (T2a2).
21. Heat distribution system for distributing heat via a heat network (100), preferably a district heating network, to consumers (S1, T1, T2) such as a plurality of public or industrial buildings, wherein the heat network
   comprises a primary part (H1) for connection to a primary consumer (S1) and
   comprises a secondary part (H2) for connection to one or more secondary consumers (T1, T2),
   wherein the secondary part (H2) lies downstream of the primary part (H1); and
   wherein the heat distribution system is configured with
      - a steam feed conduit (K1) which is arranged to feed steam (ss) from a steam source (HS) to the primary consumer (S1) in order to supply heat to the primary consumer (S1), wherein the steam (ss) is converted into condensate (cs) at a location which lies higher than the downstream secondary part (H2) of the heat network; and
   wherein the heat distribution system is further configured with
      - a feed conduit (K2) which is arranged to supply the formed condensate (cs) from the higher location in the primary part (H1) to the one or more secondary consumers (T1, T2) in the secondary part (H2) using a hydrostatic pressure.
22. The heat distribution system according to the foregoing clause,
   wherein the distribution system is configured to convert the steam (ss) into the condensate (cs) at a height so that the hydrostatic pressure amounts to more than 2 bar, preferably more than 3 bar, still more preferably more than 4 bar, even more preferably more than 5 bar, such as between 5 - 6 bar.
23. The heat distribution system according to any one of the foregoing clauses, wherein the primary consumer (S1) lies higher relative to the one or more secondary consumers (T1, T2).
24. The heat distribution system according to any one of the foregoing clauses, wherein the primary consumer (S1) lies higher relative to the steam source (HS).
25. The heat distribution system according to the foregoing clause, wherein the primary consumer (S1) and the one or more secondary consumers (S2) lie higher relative to the steam source (HS).
26. The heat distribution system according to any one of the foregoing clauses, wherein the distribution system comprises a heat exchanger (HEXi) for supplying heat to the primary consumer (S1) by means of the steam (ss), wherein the heat exchanger (HEX₁) is placed at a height of at least 10 metres, preferably at least 20 metres above, still more preferably at least 30 metres above the ground.
27. The heat distribution system according to any one of the foregoing system clauses, wherein the steam feed conduit (K1)
   has a first conduit end (K1a) at the steam source (HS) and
   has a second conduit end (K1b) at a firstly-located primary consumer (S1) in the primary part (H1) of the heat network (H1), wherein the second conduit end (K1b) lies higher than the first end (K1a); and
   wherein:
   the height difference between the first and second conduit end (K1a, K1b) of the steam feed conduit (K1) amounts to more than 10 metres, preferably more than 20 metres, more preferably more than 30 metres and most preferably more than 40 metres.
28. The heat distribution system according to any one of the foregoing system clauses, wherein the steam feed conduit (K1) covers a distance between the steam source (HS) and a firstly-located consumer (S1) in the primary part (H1) of at least 500 m, preferably at least 1 km, more preferably at least 2 km.
29. The heat distribution system according to any one of the foregoing system clauses, wherein the system further
   comprises one or more connecting conduits (KV1, KV2) which connect the steam feed conduit (K1) to the secondary part (H2) of the heat network in order to feed the secondary part (H2) with thermal energy.
30. The heat distribution system according to the foregoing clause,
   wherein the one or more connecting conduits (KV1, KV2) are connected to heat exchangers (HEX₂, HEX₃) which are arranged in the secondary part (H2) of the heat network in order to supply thermal energy from steam (ss') from the connecting conduits (KV1, KV2) to the secondary part of the heat network.
31. The heat distribution system according to the foregoing clause,
   wherein the heat exchangers (HEX₂, HEX₃) are arranged to deliver heat upstream and/or downstream of secondary heat consumers (T1, T2) in the secondary part (H2) of the heat network.
32. The heat distribution system according to any one of the foregoing system clauses,
   wherein the primary part (H1) comprises a plurality of primary consumers (S1, S2); and wherein the distribution system is configured to supply steam (ss) to the plurality of consumers (S1, S2).
33. The heat distribution system according to any one of the foregoing system clauses, wherein the distribution system further comprises a storage tank (BT) which is arranged at a location higher than the one or more secondary consumers (T1, T2) in the secondary part (H2).
34. The heat distribution system according to any one of the foregoing system clauses, wherein the secondary part (H2) of the heat network
   comprises a return conduit (K3);
   wherein the distribution system is configured
      to supply heat using an energy carrier (e1), preferably the condensate (cs), through the feed conduit (K2) to one or more consumers (T1, T1a, T1b) which are connected between the feed conduit (K2) and the return conduit (K3); and is further configured
      to receive the used energy carrier (e2) back from these one or more consumers (T1, T1a, T1b) via the return conduit and to return the used energy carrier (e2) back to the steam source (HS) via the return conduit K3).
35. The heat distribution system according to the foregoing clause,
   wherein the distribution system is further configured to supply heat to one or more second-type consumers (T2, T2a, T2b) which are connected in parallel to the return conduit (K3) via respectively a branching point (P2a) and a return point (P2b).
36. The heat distribution system according to the foregoing clause,
   wherein a regulator (RP2), such as a control valve, is arranged in the return conduit (K3) between the branching point (P2a) and the return point (P2b).
37. The heat distribution system according to the foregoing clause,
   wherein the regulator (RP2) is connected operatively to a corresponding consumer (T2b) which is connected in parallel.
38. The heat distribution system according to any one of the foregoing clauses,
   which is further configured to preheat returning water in the return conduit (K3) upstream of the steam source (HS), for instance with residual heat.
39. The heat distribution system according to any one of the foregoing clauses, wherein conduits of the heat network are provided with an insulator which is arranged internally in the conduits.
40. Heat distribution system comprising a heat network for distributing heat, wherein the heat network comprises a feed conduit (K2) and a return conduit (K3), wherein the system is configured to supply heat to a plurality of consumers (T1, T2) such as a plurality of public or industrial buildings; wherein the plurality of consumers (T1, T2) comprises one or more first-type consumers (T1) and comprises one or more second-type consumers (T2), wherein:
   - the feed conduit (K2) is configured to supply heat from a heat source (HS) to the first-type consumers using an energy carrier (e1);
   - the return conduit (K3) is configured to receive the used energy carrier (e2) from the first-type consumers (T1, T1a, T1b) and is further configured to feed the used energy carrier (e2) back to the heat source (HS);
   - the return conduit (K3) is further configured to deliver heat to one or more second-type consumers (T2, T2a, T2b) which are connected in parallel to the return conduit (K3) via respectively a branching point (T2p1) and a return point (T2a2).

### Brief description of the figures

Aspects of the invention will now be described in more detail with reference to the drawings illustrating several preferred embodiments of the invention.
Figure 1 shows a heat distribution system with a primary and secondary part.
Figure 2 shows the embodiment of figure 1 with additional features.
   Figure 3 shows a heat distribution system, the secondary part of which is shown in more detail.
   Figure 4 shows the embodiment of figure 3 with additional features.
   Figure 5 shows a heat distribution system for supplying heat to primary and secondary consumers, wherein the secondary consumers comprise a first- and second-type consumer.
   Figure 6 shows an embodiment for supplying heat to first- and second-type consumers.

The skilled person will appreciate on the basis of the description herein that the invention can be embodied in different ways and on the basis of different principles. The invention is therefore not limited to the above described exemplary embodiments.

### Detailed description of the invention

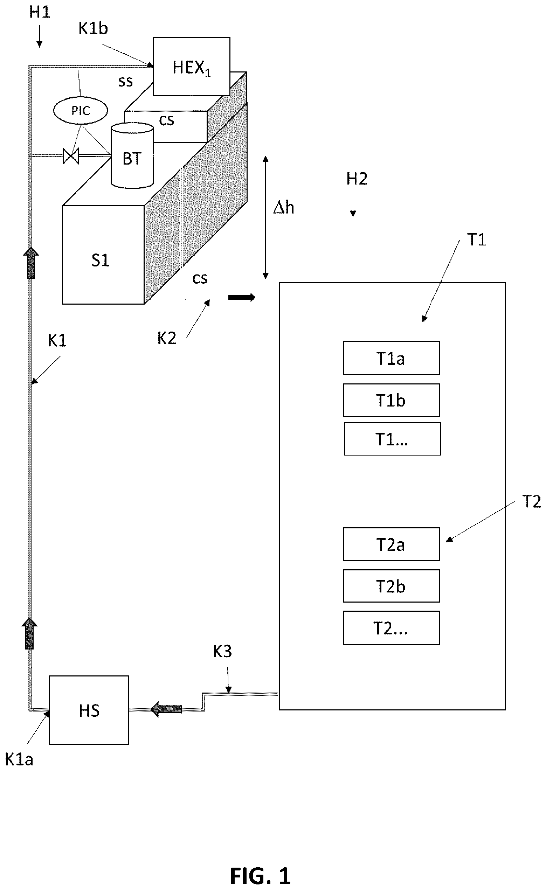

In the shown figures the same or similar elements are designated with the same reference. The same or similar elements typically have the same features and technical advantages. Figure 1 shows an embodiment of a heat distribution system with a primary part H1 and secondary part H2. The heat network as shown can supply heat to a plurality of consumers, such as the consumers S1, T1, T2. The heat network is preferably a district heating network which supplies heat to a plurality of buildings and consumers in a city, district or region. The heat network typically forms a closed loop as shown, wherein the energy carrier of the heat is fed back to the original heat source. The heat network as shown comprises a primary part H1 which is connected to a primary consumer S1, such as a steam consumer, and a secondary part H2 which is connected to a plurality of secondary consumers T1, T2, such as one or more residential or commercial consumers.

The heat network is provided with a steam supply conduit K1, a condensation supply conduit K2 and preferably a return conduit K3. The heat network is preferably a closed heat network, the heat-carrying medium, also referred to as energy carrier, can thus be reused to enhance efficiency. The energy carrier comprises substantially water, for instance in the form of steam or condensation. The primary part H1 of the heat network as shown in figure 1 is connected to consumer S1, in this case a steam consumer S1. The heat source is in this case a steam source. The secondary part H2 of the heat network lies downstream of the primary part H1. The secondary part H2 is connected to one or more secondary consumers T1, T2. The secondary part H2 can preferably be connected to one or more first-type T1a, T1b, and so on secondary consumers and one or more second-type T2a, T2b, and so on secondary consumers, as will be described further.

Figure 1 demonstrates that heat in the form of steam (ss) can be fed via feed conduit K1 from steam source HS to the primary consumer S1. The steam (ss) is converted here into condensate (cs) at a relatively high location, particularly a location lying higher than the downstream secondary part H2 of the heat network, more specifically higher than the points where heat is supplied to the secondary consumers. The height difference that is thus present is designated with Δh. In this way a usable operating pressure on the downstream secondary part is provided for.

The feed conduit K2 is further arranged to supply the formed condensate (cs) from the higher location in primary part H1 to the one or more secondary consumers T1, T2 in the secondary part H2 using gravitation. Hereby, the need for circulation pumps can be reduced and/or use can be made of pumps with less power. There is furthermore less noise nuisance as a result of the cleverly configured distribution system. It will be apparent that the height difference is preferably sufficiently large to provide a desired working pressure or operating pressure in the secondary part H2 of the heat network. The heat exchanger (HEX₁) of the first steam consumer (S1) is thus preferably placed at an already existing (high) building. If this is not present or available, a hill can be used. A simple structure, such as a tower, can optionally be built. The condensation (cs) is preferably supplied to the secondary part H2 of the heat network at a pressure amounting to more than 2 bar, preferably a pressure of more than 3 bar, still more preferably a pressure of more than 4 bar, even more preferably a pressure of more than 5 bar, such as a pressure of 5-6 bar. This pressure is measurable at the firstly-located secondary consumer T1a, more specifically at the position of a point of delivery where heat is supplied to the first downstream consumer after the phase transition of the steam to condensate for the release of heat to the primary consumer S1.

Figure 1 shows that the steam feed conduit K1 is arranged between the heat source HS and that a heat exchanger HEX₁ is arranged at the position of the primary consumer S1. The heat exchanger HEX₁ is here preferably arranged at a height, so that the hydrostatic pressure preferably amounts to at least 2 bar. The pressure is typically measurable in the feed conduit K2 at a feed point of the first downstream secondary consumer T1. More specifically, the heat exchanger HEX₁ is placed at a height of at least 10 metres, preferably at least 20 metres, still more preferably at least 30 metres above the ground. In this way the formed condensate in the heat exchanger HEX₁ can be efficiently fed to the secondary part H2 of the heat network and preferably subsequently fed back to the steam source HS using gravitation via return conduit K3.

Figure 1 illustrates that the steam feed conduit K1 has a first conduit end K1a at the steam source HS and a second conduit end K1b at a firstly-located primary consumer S1 in the primary part H1 of heat network H1. The second conduit end K1b lies higher than the first end K1a. This enables the steam to be converted into condensate (or condensation), which contains a usable potential energy and can be carried further downstream to the secondary part H2 of the heat network using gravity as a result of the usable potential energy. The height difference between the first conduit end K1a and second conduit end K1b of the steam feed conduit K1 is preferably more than 10 metres, preferably more than 20 metres, more preferably more than 30 metres and most preferably more than 40 metres. In order to provide a desired potential energy the supplied steam (ss) is converted into condensate (cs) at a height of at least 10 metres, preferably at least 20 metres, still more preferably at least 25 metres above the ground. The formed condensate can thus be carried further downstream using gravitation.

Steam feed conduit K1 is configured to transport steam from the steam source HS to the first consumer S1, in this case a steam consumer. The "first" or "firstly-located primary consumer" refers to the consumer lying furthest upstream and closest to the steam source. The consumer differs from the steam source, the steam source for instance being located at a steam producer, such as a waste processing plant, and the consumer being a building, such as a public or commercial building, located further away. The consumer S1, particularly the first downstream consumer S1, preferably lies at a distance from the steam source HS, preferably at a distance of at least 500 m, preferably at least 1 km, more preferably at least 2 km.

Figure 1 further illustrates that a storage tank BT is arranged at a location higher than the secondary consumers T1, T2 in the secondary part of the heat network. The storage tank can thus have a buffer function. The higher location is particularly chosen so that condensate (cs) can be supplied from the storage tank BT using gravitational forces resulting from the height difference between the storage tank BT and the downstream secondary consumers T1, T2 in the secondary part H2. Figure 1 further shows that a regulator, designated with PIC, is arranged to regulate the increasing and/or maintaining of pressure in the secondary part H2 of the heat network using a steam pressure coming from the steam source HS. The regulator can be arranged in any suitable manner. As shown in figure 1, the regulator PIC is configured to receive input data, such as data from a pressure measurement, from the steam feed conduit K1, for instance using a pressure sensor, and is further configured to receive input data downstream of the feed conduit K1, such as input data from storage tank BT. The regulator is here configured to regulate the pressure downstream of the steam feed conduit K1 on the basis of the input data. For instance using a steam pressure from feed conduit K1, such as a steam pressure which can be supplied to storage tank BT via a conduit provided with a control valve, as shown in figure 1. In a preferred embodiment the regulator is provided with a PIC regulator (*Programmable Integrated Circuit*) to provide control of the steam pressure in the system. The steam pressure from feed conduit K1 could be used to provide additional pressure on the secondary part H2 of the heat network. Formed condensation can be collected in buffer tank BT or in a plurality of buffer tanks, after which it can be pushed further to the secondary part H2 using steam pressure. In an embodiment the energy carrier is fed from the buffer tank to secondary part H2 in batches, depending on requirement.

The conduits of the heat network are preferably arranged substantially under the ground. The conduits of the heat network are generally provided internally with an insulator in order to minimize heat loss. It is particularly by providing the insulator internally that less maintenance is required, since the insulator is better protected against external influencing factors which can cause damage to the insulator. The conduits are for instance manufactured from steel. The insulator preferably comprises an epoxy layer which is arranged internally in the conduit. The conduits typically have a jacket wall with an inner wall, the insulator is then preferably arranged internally against the inner wall.

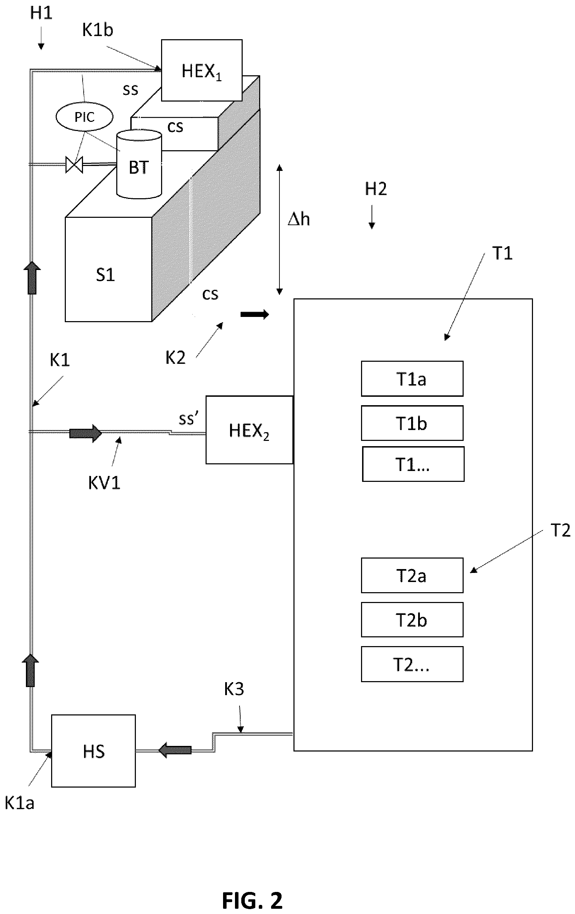

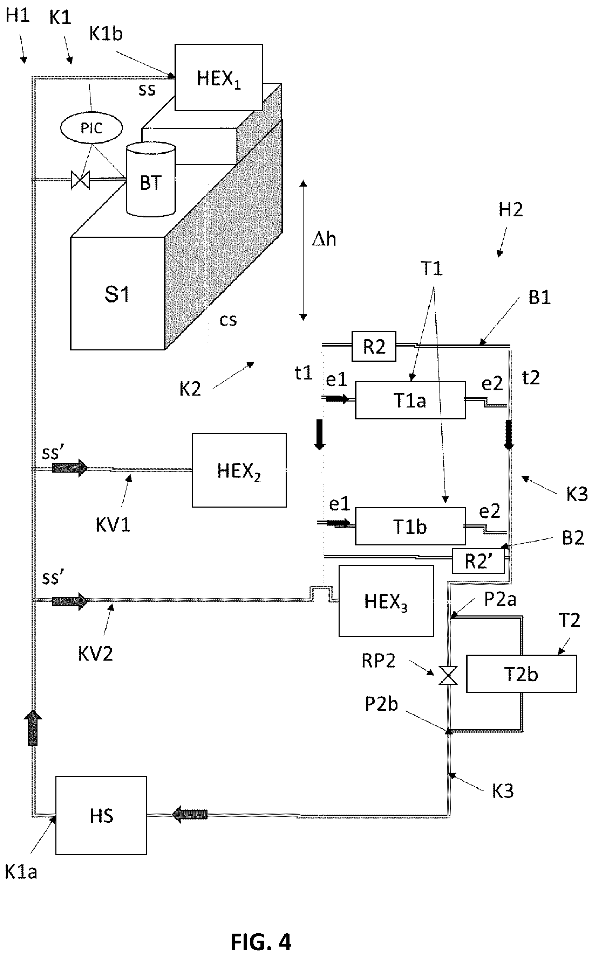

Figure 2 shows a similar system as figure 1 and further shows that a connecting conduit KV1 is arranged, which connects the steam feed conduit K1 to the secondary part H2 of the heat network in order to feed secondary part H2 with thermal energy. This makes it possible to regulate temperature regimes in the secondary part H2 of the heat network without being dependent on the behaviour of the consumer S1 in the primary part H1 of the heat network. The connecting conduit KV1 can be provided with a regulator which is configured to regulate the flow rate of the energy carrier through the connecting conduit. The regulator on connecting conduit KV1 is preferably connected operatively to the operator of the distribution system. As shown, connecting conduit KV1 is connected to a heat exchanger HEX₂ which is arranged in the secondary part H2 of the heat network to supply the thermal energy from steam (ss') from connecting conduit KV1. The intelligent configuration and the layout of the distribution system as described herein further provides the option of arranging a plurality of connecting conduits if demand by and/or the number of secondary consumers T1, T2 in the secondary part H2 were to increase. Figure 4 thus shows an example wherein a plurality of connecting conduits, see connecting conduits KV1, KV2, are arranged.

If it is possible that steam consumer S1 might fail, it is advantageous to provide a backup system. In an embodiment (not shown) feed conduit K1 can be connected to a heat exchanger, for instance HEX_{1B}, which is configured to supply heat to the heat network at a location between the steam consumer S1 and the start of the secondary part H2 of the heat network. In this way thermal energy from steam (ss') can also be supplied from feed conduit K1 to the secondary part H2 of the heat network.

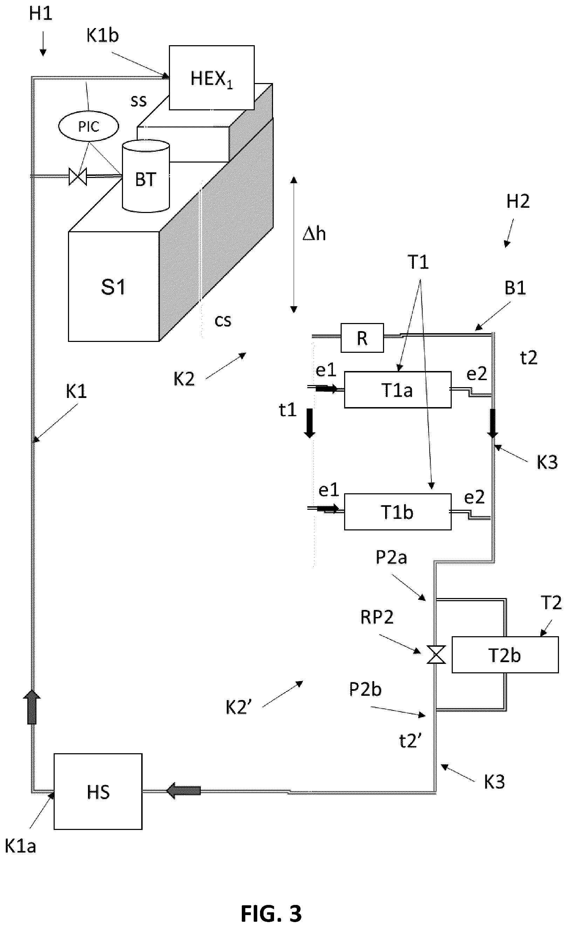

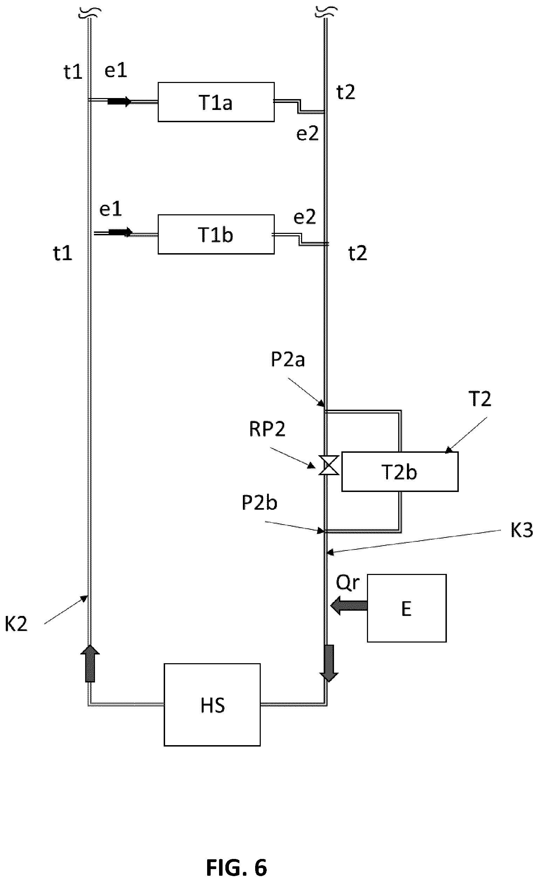

Figure 3 shows a possible embodiment of the secondary part H2 of the heat network in more detail. The above described elements with the same references can also have the same characteristics in this embodiment. Figure 3 shows the steam source HS which delivers steam via the steam feed conduit K1 to the first consumer S1. The steam feed conduit K1 is preferably provided internally with an insulator. The steam can be transported over a distance through feed conduit K1, such as a distance of at least 500 metres. During transport the steam is brought to a certain height and converted into condensate. During this phase transition at a height, heat can be delivered to the first consumer S1. The condensate (cs) formed at a height is then supplied to the secondary part H2 of the heat network via condensate feed conduit K2. The secondary part H2 of the heat network can comprise a plurality of secondary consumers T1, T2, such as first-type secondary consumers (designated with T1, T1a, T1b, ...) and second-type secondary consumers (designated with T2, T2a, T2b, ...). These secondary consumers T1, T2 can be configured and laid out in the heat network, for instance in a part which is connected directly to the heat source as shown in figure 6, independently of the primary part H1.

Figure 3 illustrates that the heat distribution system is provided with a feed conduit K2, which can also be described as a condensation feed conduit K2 in the case of a context wherein the condensation is supplied from a height. The feed conduit K2 feeds the energy-carrying medium, also referred to as an energy carrier, to the secondary part H2 of the heat network. The energy carrier is water and/or condensation in the case that steam was previously converted into condensate by a first consumer. First-type consumers T1a, T1b are connected to feed conduit K2 and can thus be provided with heat. More specifically, the first-type consumers are connected between a feed conduit K2 and a return conduit K3 which differs from the feed conduit.

The temperature regime t1 of feed conduit K2 is typically higher than the temperature regime t2 of return conduit K3. Feed conduit K2 is preferably provided internally with an insulator. The "temperature regime" as described herein refers to a controlled temperature level of the energy carrier (typically warm water) which is distributed through the network. There are generally two regimes, for instance a first regime t1, such as a high regime, wherein the energy carrier flows through the heat network at a temperature of for instance 70 - 120°C and a second regime t2 such as a low regime, wherein the energy carrier flows through the heat network at a temperature of for instance less than 70°C, such as a temperature of between 40 - 70°C.

In the embodiment of figure 3 it is possible that the temperature regime t1 on feed conduit K2 is higher than the temperature regime t2 on the return conduit.

Feed conduit K2 is configured to supply an energy carrier e1, such as water or condensation in this case, originally coming from heat source HS, to the first-type (secondary) consumers T1a, T1b. The first-type (secondary) consumers T1a, T1b can thus be provided with heat wherein the energy carrier is used. The used energy carrier e2 is received by return conduit K3, for instance at the position of receiving points or delivery points where the first-type consumers return the used energy carrier e2. Return conduit K3 is configured to receive the used energy carrier from consumers T1a, T1b and to feed it back to the original heat source HS, such as steam source HS.

Figure 3 further illustrates a second-type secondary consumer T2b, which is connected in parallel to return conduit K3. In other words, the second-type secondary consumer T2b is connected to the same conduit for both consuming and returning the energy carrier. It should be noted that the second-type secondary consumers T2 can be connected to return conduit K3 at any suitable point, for instance downstream of the delivery points were the first-type consumers T1 return the used energy carrier e2 to the heat network via return conduit K3 (as shown). Additionally or alternatively, a plurality of second-type consumers T2 (not shown) can be connected to return conduit K3, for instance between the delivery points where the first-type consumers T1 are connected to return conduit K3 to return the used energy carrier e2 to the heat network. The combination of the first- and second-type (secondary) consumers T1, T2 is favourable for a more efficient distribution and heat utilization. As shown in figure 3, regulator RP2 is arranged in return conduit K3 between branching point P2a and return point P2b whereby the second-type consumer T2b is connected in parallel to return conduit K3. regulator RP2 is preferably connected operatively to consumer T2b so that the consumer controls the amount of heat that can be supplied to it via return conduit K3.

One or more controllable control conduits B1, B2 can further be arranged in the distribution system in order to give the operator of the distribution system control. Figure 3 shows an example wherein a first control conduit B1 is arranged between a point upstream of the first secondary consumer T1a and a point on return conduit K3. The control conduit B1 can be provided here with a regulator R2 for regulating a flow rate through the conduit. The regulator R2 is preferably connected operatively to the operator of the distribution system. The distribution system can comprise a plurality of control conduits B1, B2. Figure 4 thus shows an embodiment wherein a second control conduit B2 is arranged between feed conduit K2 and return conduit K3. The control conduit B2 is preferably provided with a regulator R2' for regulating the flow rate through the conduit.

Figure 4 further shows an embodiment wherein connecting conduits KV1, KV2 are connected to heat exchangers HEX₂, HEX₃ which are arranged in the secondary part H2 of the heat network to supply thermal energy from steam (ss') from heat source HS, or steam source HS in this case, via connecting conduits KV1, KV2 to the secondary part H2 of the heat network. The connecting conduits KV1, KV2 can be connected directly to the steam source HS and/or to the steam feed conduit K1.

One or more heat exchangers HEX₂, HEX₃ are preferably arranged in order to provide the secondary part H2 with heat, such as additional heat in addition to the heat being fed through feed conduit K2 to the secondary part H2 of the heat network via the condensation (cs). Figure 4 shows that heat exchangers HEX₂, HEX₃ are arranged in order to deliver heat upstream and/or downstream of the secondary heat consumers T1, T2 in the secondary part H2 of the heat network. The heat exchangers HEX₂, HEX₃ are connected via connecting conduits KVA1, KVA2 to the steam feed conduit K1 and are configured to receive steam via connecting conduits KVA1, KVA2. Heat exchangers HEX₂, HEX₃ can further be configured to feed heat to the conduits in the secondary part H2 of the heat network via condensation. The heat can be supplied to the secondary part of the heat network at any desired feed point. The connecting conduits are preferably provided internally with an insulator. In figure 4 heat exchanger HEX₂ is arranged to supply heat via a feed point on feed conduit K2 downstream relative to the secondary consumer T1a and upstream relative to the secondary consumer T1b. Figure 4 further shows heat exchanger HEX₃ which is arranged to supply heat via a feed point on return conduit K3 upstream relative to the second-type secondary consumer T2b, which is connected in parallel to the return conduit. The feed point of the heat exchanger HEX₃ lies on return conduit 3 upstream relative to the branching point P2a of the second-type consumer T2b connected in parallel.

It is generally advantageous to arrange a heat exchanger which supplies heat in the secondary part to a feed point on a conduit which lies upstream of at least one of the secondary consumers, such as feed conduit K2 and/or return conduit K3. The use of the heat exchangers provides the option of expanding the heat network if desired.

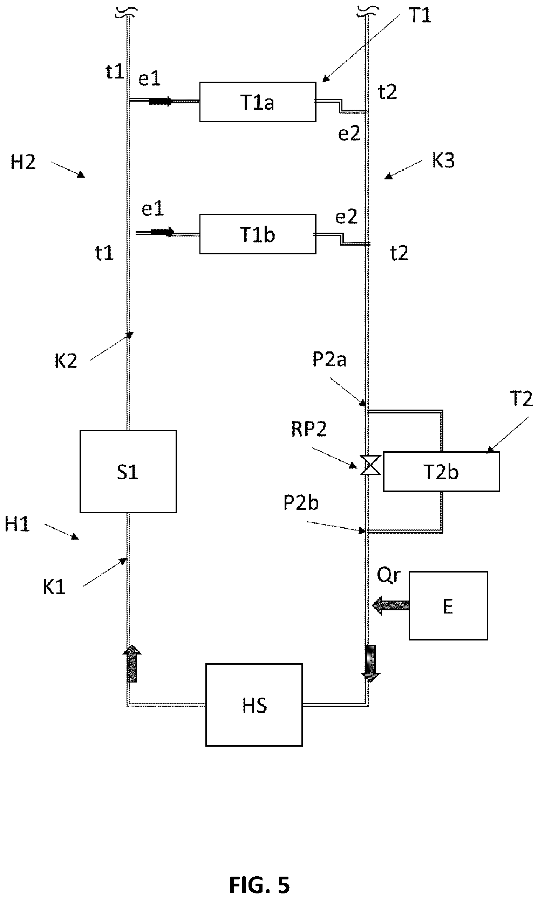

Figure 5 shows an embodiment of a heat distribution system for supplying heat to a primary consumer S1 (here a steam consumer S1) and secondary consumers T1, T2. Figure 6 shows an embodiment for supplying heat to consumers using an energy carrier in the form of water (in other words, not in the form of steam). The embodiment shown in figure 6 also has the object, among others, to distribute heat with an increased efficiency, this therefore being the same objective as the above described embodiments in figures 1-5. Figure 5 shows a distribution system wherein the heat source HS can supply steam to the primary consumer S1 via the steam feed conduit K1. It will be apparent that the heat source HS in figure 5 is a steam source and it will be apparent that the heat source HS in figure 6 is a warm water source. The term "warm water" typically refers to water above 15°C, such as water above 25°C, preferably water above 30°C. In figure 5 the steam is converted into condensate during release of heat to the primary consumer S1. Preferably converted into condensate at a height as described above. The condensate is thus preferably fed to consumers T1, T2 in the secondary part H2 of the heat network using gravitational forces.

The distribution system as shown in figures 5 and 6 is further configured to supply heat using an energy carrier e1 (condensate in figure 5, warm water in figure 6) via feed conduit K2 to the secondary consumers T1a, T1b which are connected between feed conduit K2 and return conduit K3. The first-type secondary consumers receive heat, typically from a temperature regime t1 which is higher than the temperature regime t2 of return conduit K3. Return conduit K3 is configured to receive the used energy carrier e2 (typically in the form of water at a lower temperature than the supplied water as energy carrier e1). Return conduit K3 is further configured to return the received used energy carrier e2 back to the steam source HS. It is particularly preferred in general that the heat network is a closed heat network, i.e. that the energy carrier is fed back to the original heat source, such as the steam source. As described above, one or more second-type consumers T2b can be connected in parallel to return conduit K3. An improved heat utilization can be provided for in this way.

Figure 6 shows a distribution system for distributing heat via a heat network, preferably a district heating network. The system is configured to supply heat using an energy carrier e1, such as water, through feed conduit K2 to consumers T1a, T1b via feed conduit K2. Said consumers are connected between the feed conduit K2 and a return conduit K3. Return conduit K3 is configured to receive the used energy carrier from the consumers and to feed it back to the heat source.

Figure 6 further illustrates that a second-type consumer T2b is connected in parallel to return conduit K3 via respectively a branching point P2a and a return point P2b. Making the combination of the first- and second-type consumers enables the heat provided in the heat network to be utilized efficiently.

It should be noted that a plurality of second-type consumers (not shown) can be connected to the heat network. The one or more second-type consumers are preferably connected to the return conduit downstream of the one or more first-type consumers.

Figure 6 further shows that regulator RP2 is arranged in return conduit K3 between branching point P2a and return point P2b. regulator RP2 is preferably connected operatively to a corresponding consumer T2b which is connected in parallel. In this way the consumer controls the amount of heat which can be supplied via the return conduit to the relevant consumer. In figure 5 and figure 6 the shown heat distribution system is further provided to receive heat Qr from an external heat producer E upstream of the heat source and downstream of the consumers. The heat distribution system can however be configured to receive the heat Qr from the external heat producer E at any suitable point in the heat network for an additional heat injection.

The described embodiments and the figures are purely illustrative and serve only to increase understanding of the invention. The invention is not therefore limited to the embodiments described herein, but is defined in the claims.

## Claims

1. Method for distributing heat via a heat network, preferably a district heating network, to consumers (S1, T1, T2) such as a plurality of public or industrial buildings, wherein a primary consumer (S1) is connected to a primary part (H1) of the heat network; wherein the heat network further comprises a secondary part (H2) which lies downstream of the primary part (H1) and wherein one or more secondary consumers (T1, T2) are connected to the secondary part (H2);
wherein the method comprises of:
- supplying steam (ss) coming from a steam source (HS) to the primary consumer (S1) and herein delivering heat (Q), wherein the steam (ss) is converted into condensate (cs) at a location which lies higher than the downstream secondary part (H2) of the heat network in order to supply the condensate (cs) to the one or more secondary consumers (T1, T2) in the secondary part (H2) using a hydrostatic pressure.

2. The method according to the foregoing claim,
wherein formed condensate (cs) is supplied to the secondary part (H2) of the heat network at a pressure amounting to more than 2 bar, preferably a pressure of more than 3 bar, still more preferably a pressure of more than 4 bar, even more preferably a pressure of more than 5 bar, such as between 5-6 bar, using a hydrostatic pressure resulting from a height difference (Δh); and/or wherein the supplied steam (ss) is converted into condensate (cs) at a height of at least 10 metres, preferably at least 20 metres above the ground; and/or wherein the hydrostatic pressure with which the condensate (cs) is delivered to a firstly-located secondary consumer (T1) in the secondary part (H2) is the result of a height difference of more than 10 metres, preferably more than 20 metres, more preferably more than 30 metres.

3. The method according to any one of the foregoing claims, wherein the steam (ss) is supplied to a primary consumer (S1) of the primary part (H1) via a steam feed conduit (K1);
wherein the steam feed conduit (K1)
has a first conduit end (K1a) at the steam source (HS) and
has a second conduit end (K1b) lying at a firstly-located primary consumer (S1) in the primary part (H1) of the heat network (H1), wherein
the second conduit end (K1b) lies more than 10 metres, preferably more than 20 metres,
more preferably more than 30 metres and most preferably more than 40 metres higher than the first end and wherein the method comprises of:
- transporting and supplying steam (ss) through the steam feed conduit (K1) up to at least the second conduit end (K1b).

4. The method according to any one of the foregoing claims, wherein the heat network is a district heating network; and
wherein a firstly-located primary consumer (S1) in the primary part (H1) of the heat network lies at a distance of more than 500 m, preferably more than 1 km, more preferably more than 1.5 km, from the steam source (HS);
the method further comprising of:
- transporting steam (ss) from the steam source (HS) up to the firstly-located primary consumer (S1) in the primary part (H1) of the heat network before feeding the formed condensation (cc) in the primary part (H1) back to the steam source (HS) via the secondary part (H2) of the heat network.

5. The method according to any one of the foregoing claims, wherein the steam (ss) is supplied to a primary consumer (S1) of the primary part (H1) via a steam feed conduit (K1), the method further comprising of:
- feeding the secondary part (H2) of the heat network with heat from steam (ss') coming from the steam source (HS) by means of steam from the steam feed conduit (K1), preferably wherein feeding the secondary part (H2) comprises of feeding via heat exchangers (HEX₂, HEX₃); and further comprising of:
- storing the condensate (cs) in a storage tank (BT) at a location higher than the one or more secondary consumers (T1, T2) in order to deliver the condensate (cs) from the storage tank (BT) using a hydrostatic pressure resulting from a height difference between the storage tank (BT) and the one or more secondary consumers (T1, T2) in the secondary part (H2).

6. The method according to any one of the foregoing claims, further comprising of:
- increasing and/or maintaining the pressure in the secondary part (H2) of the heat network using a steam pressure coming from the steam source (HS);
preferably wherein the pressure in the secondary part (H2) of the heat network is increased and/or maintained using a steam pressure coming from a steam feed conduit (K1) which is used to supply the steam (ss) to a primary consumer (S1) of the primary part (H1).

7. The method according to any one of the foregoing claims, wherein the secondary part (H2) of the heat network comprises a feed conduit (K2) and a return conduit (K3), wherein one or more first-type secondary consumers (T1, T1a, T1b) are connected between the feed conduit (K1) and the return conduit (K3);
wherein the method comprises of:
- supplying condensate (cs) as energy carrier (e1) to the one or more connected secondary consumers (T1, T1a, T1b) via the feed conduit (K2); and
- receiving the used energy carrier (e2) via the return conduit (K3) and subsequently feeding the used energy carrier (e2) back to the steam source (HS) via the return conduit (K3);
the method preferably further comprising of:
- delivering heat to one or more second-type consumers (T2, T2a, T2b) which are connected in parallel to the return conduit (K3) in the secondary part (H2) of the heat network via respectively a branching point (T2p1) and a return point (T2a2) and of regulating a flow rate in the return conduit (K3) or having it be regulated by the corresponding consumer (T2a), which is connected in parallel, using a regulator (R) which is placed between the branching point (T2p1) and the return point (T2a2);
wherein the steam source (HS) is an industrial residual heat source (HS) and wherein the plurality of consumers (S1, T1, T2) are selected from residential consumers, commercial consumers, industrial consumers or combinations thereof; preferably wherein the residential consumers are selected from one or more of: apartment complexes, residential areas, single-family homes, care institutions; and/or wherein the commercial consumers are selected from one or more of: office buildings, shopping centres, hotels, schools; and/or wherein the industrial consumers are selected from one or more of: factories, refineries, food processing companies, paper factories.

8. Method for distributing heat via a heat network comprising a feed conduit (K2) and a return conduit (K3), wherein the heat is supplied to a plurality of consumers (T1, T2) such as a plurality of public or industrial buildings; wherein the heat network comprises a part (H2) to which one or more first-type consumers (T1) and one or more second-type consumers (T2) are connected; the method comprising of:
- supplying heat (cs) coming from a heat source (HS) via the feed conduit (K2) to the first-type consumers which are connected between the feed conduit (K2) and the return conduit (K3); wherein the heat is supplied to the first-type consumers (T1, T1a, T1b) using an energy carrier (e1); and
wherein the method comprises of:
- receiving used energy carrier (e2) from the first-type consumers (T1) via the return conduit (K3) and subsequently feeding the used energy carrier (e2) back to the steam source (HS) via the return conduit (K3);
- delivering heat to one or more second-type consumers (T2, T2a, T2b) which are connected in parallel to the return conduit (K3) via respectively a branching point (T2p1) and a return point (T2a2).

9. Heat distribution system for distributing heat via a heat network (100), preferably a district heating network, to consumers (S1, T1, T2) such as a plurality of public or industrial buildings, wherein the heat network
comprises a primary part (H1) for connection to a primary consumer (S1) and
comprises a secondary part (H2) for connection to one or more secondary consumers (T1, T2),
wherein the secondary part (H2) lies downstream of the primary part (H1); and
wherein the heat distribution system is configured with
a steam feed conduit (K1) which is arranged to feed steam (ss) from a steam source (HS) to the primary consumer (S1) in order to supply heat to the primary consumer (S1), wherein the steam (ss) is converted into condensate (cs) at a location which lies higher than the downstream secondary part (H2) of the heat network; and
wherein the heat distribution system is further configured with
a feed conduit (K2) which is arranged to supply the formed condensate (cs) from the higher location in the primary part (H1) to the one or more secondary consumers (T1, T2) in the secondary part (H2) using a hydrostatic pressure; preferably wherein the distribution system is configured to convert the steam (ss) into the condensate (cs) at a height so that the hydrostatic pressure amounts to more than 2 bar, preferably more than 3 bar, still more preferably more than 4 bar, even more preferably more than 5 bar, such as between 5-6 bar.

10. The heat distribution system according to any one of the foregoing system claims, wherein the primary consumer (S1) lies higher relative to the one or more secondary consumers (T1, T2) and wherein the primary consumer (S1) lies higher relative to the steam source (HS); and/or wherein the distribution system comprises a heat exchanger (HEX₁) for supplying heat to the primary consumer (S1) by means of the steam (ss), wherein the heat exchanger (HEX₁) is placed at a height of at least 10 metres, preferably at least 20 metres above, still more preferably at least 30 metres above the ground.

11. The heat distribution system according to any one of the foregoing system claims,
wherein the steam feed conduit (K1)
has a first conduit end (K1a) at the steam source (HS) and
has a second conduit end (K1b) at a firstly-located primary consumer (S1) in the primary part (H1) of the heat network (H1), wherein the second conduit end (K1b) lies higher than the first end (K1a); and
wherein:
the height difference between the first and second conduit end (K1a, K1b) of the steam feed conduit (K1) amounts to more than 10 metres, preferably more than 20 metres, more preferably more than 30 metres and most preferably more than 40 metres.

12. The heat distribution system according to any one of the foregoing system claims,
wherein the steam feed conduit (K1) covers a distance between the steam source (HS) and a firstly-located consumer (S1) in the primary part (H1) of at least 500 m, preferably at least 1 km, more preferably at least 2 km; and/or wherein the system further
comprises one or more connecting conduits (KV1, KV2) which connect the steam feed conduit (K1) to the secondary part (H2) of the heat network in order to feed the secondary part (H2) with thermal energy; preferably wherein the one or more connecting conduits (KV1, KV2) are connected to heat exchangers (HEX₂, HEX₃) which are arranged in the secondary part (H2) of the heat network in order to supply thermal energy from steam (ss') from the connecting conduits (KV1, KV2) to the secondary part of the heat network, wherein the heat exchangers (HEX₂, HEX₃) are preferably arranged to deliver heat upstream and/or downstream of secondary heat consumers (T1, T2) in the secondary part (H2) of the heat network.

13. The heat distribution system according to any one of the foregoing system claims,
wherein the primary part (H1) comprises a plurality of primary consumers (S1, S2); and wherein the distribution system is configured to supply steam (ss) to the plurality of consumers (S1, S2); and/or wherein the distribution system further comprises a storage tank (BT) which is arranged at a location higher than the one or more secondary consumers (T1, T2) in the secondary part (H2).

14. The heat distribution system according to any one of the foregoing system claims,
wherein the secondary part (H2) of the heat network
comprises a return conduit (K3);
wherein the distribution system is configured
to supply heat using an energy carrier (e1), preferably the condensate (cs), through the feed conduit (K2) to one or more consumers (T1, T1a, T1b) which are connected between the feed conduit (K2) and the return conduit (K3); and is further configured
to receive the used energy carrier (e2) back from these one or more consumers (T1, T1a, T1b) via the return conduit (K3) and to return the used energy carrier (e2) back to the steam source (HS) via the return conduit; wherein the distribution system is preferably further configured to supply heat to one or more second-type consumers (T2, T2a, T2b) which are connected in parallel to the return conduit (K3) via respectively a branching point (P2a) and a return point (P2b) and wherein a regulator (RP2), such as a control valve, is preferably arranged in the return conduit (K3) between the branching point (P2a) and the return point (P2b), wherein this regulator (RP2) is connected operatively to a corresponding consumer (T2b) which is connected in parallel.

15. Heat distribution system comprising a heat network for distributing heat, wherein the heat network comprises a feed conduit (K2) and a return conduit (K3), wherein the system is configured to supply heat to a plurality of consumers (T1, T2) such as a plurality of public or industrial buildings; wherein the plurality of consumers (T1, T2) comprises one or more first-type consumers (T1) and comprises one or more second-type consumers (T2), wherein:
- the feed conduit (K2) is configured to supply heat from a heat source (HS) to the first-type consumers using an energy carrier (e1);
- the return conduit (K3) is configured to receive the used energy carrier (e2) from the first-type consumers (T1, T1a, T1b) and is further configured to feed the used energy carrier (e2) back to the heat source (HS);
- the return conduit (K3) is further configured to deliver heat to one or more second-type consumers (T2, T2a, T2b) which are connected in parallel to the return conduit (K3) via respectively a branching point (T2p1) and a return point (T2a2).
